# EUROPEAN PATENT SPECIFICATION

(11) **EP 0 789 174 B1**
(45) Date of publication and mention of the grant of the patent: **30.10.2002**
(21) Application number: 97200075.6
(22) Date of filing: 10.01.1997
(51) Int. Cl.: F16K 1/12, G05D 7/01

(54) **Fluid flow control device**
Anordnung zur Durchflussregulierung von Flüssigkeit
Dispositif de commande de débit d'un fluide

(30) Priority: 06.02.1996 GB 9602361
(43) Date of publication of application: 13.08.1997
(73) Proprietor: Delphi France Automotive Systems, 92257 La Garenne-Colombes (FR)
(72) Inventor: Maury, Eric Pierre, 75003 Paris (FR)
(74) Representative: Denton, Michael John

(56) References cited:
- EP-A- 0 514 767
- EP-A- 0 678 672
- US-A- 4 700 733
- US-A- 5 333 454

## Description

The present invention relates to a fluid flow control device for output flow from a fluid pump, and in particular to a fluid flow control device for output flow from a hydraulic power steering pump.

It is known to provide fluid flow control devices for power steering pumps of motor vehicles, and examples are disclosed in GB-A-2277306, US-A-4768540, US-A-4570667, US-A-4361166, and US-A-4700733. These flow control devices have a droop mechanism which provides a high output flow from the control device when the input flow to the control device (which is the output flow from the pump) is low, and a low output flow from the control device when the input flow to the control device is high.

US-A- 4700733 discloses a device in accordance with the preamble of Claim 1.

The aim of the present invention is to provide such a control device in which the output flow from the control device is substantially insensitive to back pressure in the output flow passage.

A fluid flow control device in accordance with the present invention for output flow from a fluid pump, comprises a housing having an axially extending bore therein, the bore being closed at one end of the housing and open at the other end of the housing; a piston valve slidable in the bore and biased away from the closed end; first and second pressure chambers in the bore between the-piston valve and the open end, the second pressure chamber being adjacent the piston valve; a flow restriction connecting the first and second pressure chambers; an input flow passage opening into the first pressure chamber; a return flow passage connectable with the second pressure chamber and closable by the piston valve; a droop flow device secured in the open end, the droop flow device including an output flow passage, a guide tube having an axially extending through bore connected to the output flow passage at one end, a valve seat at the other end of the through bore and positioned in the second pressure chamber, the piston valve being biased into engagement with the valve seat to normally close the through bore, at least one radially extending aperture in the guide tube, a plunger positioned around the guide tube and slidable thereon to close the or each radially extending aperture, the plunger defining a fluid path between the or each radially extending aperture and the second pressure chamber, the plunger being biased away from the piston valve to normally open the or each radially extending aperture.

By 'normally close' and 'normally open' is meant the disposition of the components when the fluid pump is not operational.

The present invention provides a fluid flow control device in which the output flow is substantially insensitive to back pressure in the output flow passage.

The present invention will now be described, by way of example, with reference to the accompanying drawings, in which:-
Figure 1 is a cross-sectional view of a droop flow device of a fluid flow control device in accordance with the present invention;
Figure 2 is a cross-sectional view of a fluid flow control device in accordance with the present invention, including the droop flow device of Figure 1, when the input flow to the control device is below a first (low) predetermined level;
Figure 3 is a graph of output flow against input flow for the fluid flow control device of Figure 2 during the stage shown in Figure 2;
Figure 4 is a similar cross-sectional view to that shown in Figure 2 but when the fluid flow control device is at the stage where input flow is between the first predetermined level and a second (high) predetermined level;
Figure 5 is a graph of output flow against input flow for the fluid flow control device of Figure 2 during the stage shown in Figure 4;
Figure 6 is a similar cross-sectional view to that shown in Figure 2 but when the fluid flow control device is at the stage where the input flow is above the second predetermined level;
Figure 7 is a graph of output flow against input flow for the fluid flow control device of Figure 2 during the stage shown in Figure 6; and
Figure 8 is a cross-sectional view similar to that of Figure 1 for an alternative arrangement for the droop flow device of a fluid flow control device in accordance with the present invention.

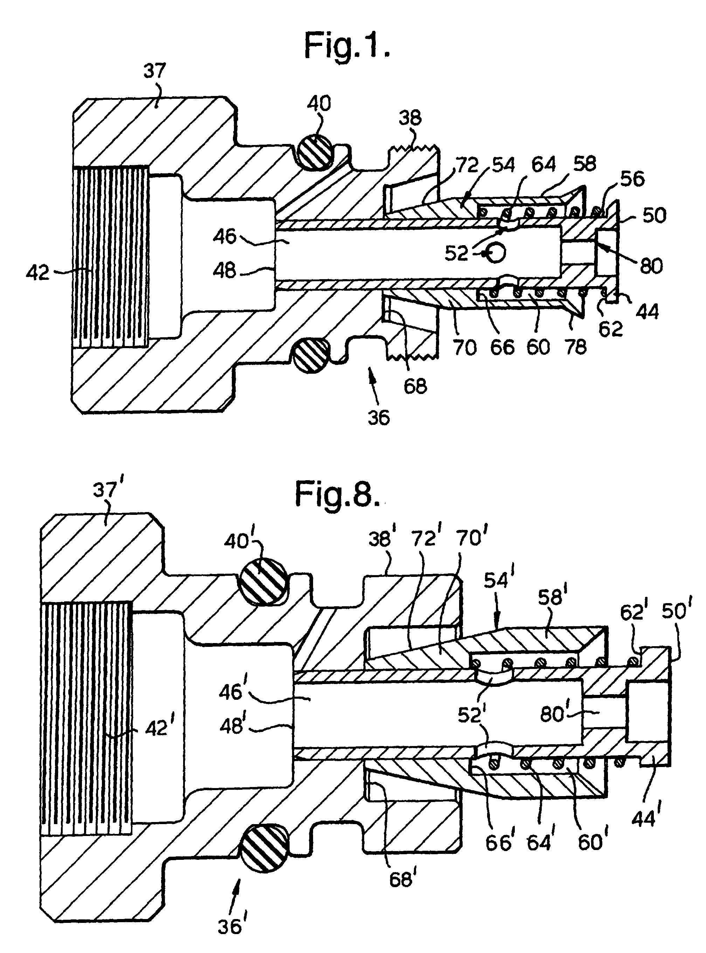

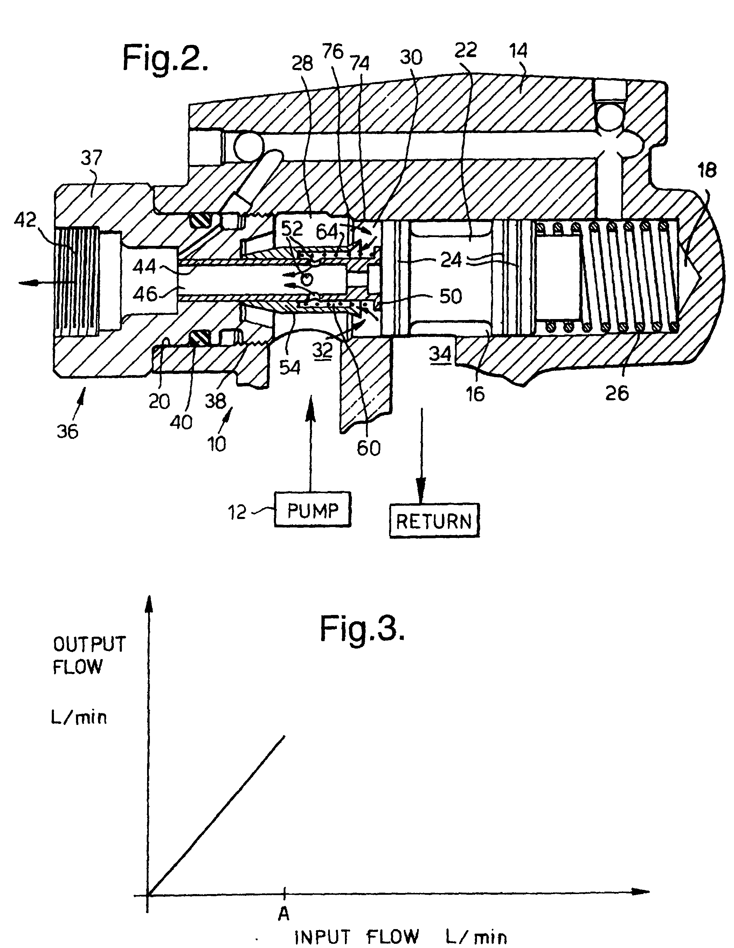

Referring to Figures 1 and 2, a fluid flow control device 10 in accordance with the present invention controls the level of output flow from the control device dependent on the level of input flow to the control device from a fluid pump 12 (for example, a hydraulic fluid pump in the power steering system of a motor vehicle). The control device 10 comprises a housing 14 having an axially extending bore 16 therein. The bore 16 is closed at one end 18 of the housing 14 and is open at the other end 20 of the housing. A piston valve 22 is positioned within the bore 16 and is slidable therein. The piston valve 22 makes a seal with the bore 16 by way of O-ring seals 24. A helical coil spring 26 is positioned in the bore 16 between the closed end 18 and the piston valve 22 and acts on the piston valve to bias the piston valve away from the closed end. The bore 16 defines first and second pressure chambers 28,30, respectively, between the piston valve 22 and the open end 20 of the bore, the second pressure chamber being adjacent the piston valve. An input flow passage 32, which is connected to the output flow passage (not shown) of the fluid pump 12, opens into the first pressure chamber 28. A return flow passage 34 is connectable with the second pressure chamber 30 dependent on the position of the piston valve 22. In the position shown in Figure 2, the piston valve 22 closes the return flow passage 34. The return flow passage 34 is connected to the input flow passage (not shown) of the fluid pump 12 and/or a fluid reservoir (not shown).

A droop flow device 36 is secured to the housing 14. The droop flow device 36 includes a fitting 37 which is secured in the open end 20 of the bore 16, preferably by way of a screw threaded connection 38, and which is sealed in the bore by an O-ring seal 40. The fitting 37 defines an output flow passage 42 for the control device 10. A guide tube 44 having an axially extending through bore 46 is secured to the fitting 37. The through bore 46 connects with the output flow passage 42 at one end 48, and has a valve seat 50 at the other end which is positioned in the second pressure chamber 30. The piston valve 22 is biased by the spring 26 into engagement with the valve seat 50 and, when the piston valve is in the position shown in Figures 1 and 2, closes the through bore 46 at said other end thereof. The guide tube 44 has a number of radially extending apertures 52 positioned between the valve seat 50 and the said one end 48 of the through bore 46. A plunger 54 makes a tight sliding fit on the outer surface 56 of the guide tube 44. The plunger 54 has a first portion 58 which is spaced from the outer surface 56 of the guide tube 44 to define an axially extending flow passage 60. The flow passage 60 opens into the second pressure chamber 30, and, when the plunger 54 is in the position shown in Figures 1 and 2, provides a fluid path between the second pressure chamber and the apertures 52. The end of the guide tube 44 adjacent the valve seat 50 is shaped to define a shoulder 62 which faces the plunger 54. A helical coil spring 64 is positioned within the flow passage 60 around the guide tube 44 and engages the shoulder 62 on the guide tube 44 and a shoulder 66 in the flow passage 60. The spring 64 acts on the plunger 54 to bias the plunger into engagement with a shoulder 68 on the fitting 37. This arrangement allows the droop flow device 36 to be pre-assembled as a one piece assembly prior to fixing in the housing 14, making assembly of the control device 10 easier. The positioning of the spring 64 around the guide tube 44 and within the flow passage 60 stabilises the mounting of the spring, and provides more accurate operation of the control device 10. This arrangement also prevents full compression of the spring 64 thereby reducing the risk of spring failure. The plunger 54 has a second portion 70 positioned within the first pressure chamber 28 which has an external surface 72 which slopes inwardly towards the guide tube 44, such that the external diameter of the plunger reduces as the plunger approaches the shoulder 68 on the fitting 37. Although this shape is not essential for the plunger 54 to move under the effects of the pressure difference between the first and second pressure chambers 28,30, it is a preferred arrangement which has benefits in terms of efficient operation of the control device 10. A flow restriction 74 is provided between the first and second pressure chambers 28,30. In this embodiment, the flow restriction 74 is defined by an inwardly directed shoulder 76 in the bore 16 between the first and second pressure chambers 28,30 and a flared end 78 on the plunger 54 where the flow passage 60 opens into the second pressure chamber. This allows the diameter of the bore 16 to be substantially constant from the second pressure chamber 30 to the closed end 18, for easier formation of the bore in the housing 14. In the alternative arrangement shown in Figure 8 (in which the same features have been given the same number, but primed '), the flared end of the plunger 54 is omitted. In a further alternative, the flared end 78 of the plunger 54 may be retained, but the shoulder in the bore 16 omitted.

In the normal, or at rest, position, when the fluid pump 12 is not operating the plunger 54 and the piston valve 22 assume the relative positions shown in Figures 1 and 2. During a first stage of operation, when the fluid pump 12 is initially started, fluid flows from the input flow passage 32 through the first pressure chamber 28 to the second pressure chamber 30 by way of flow restriction 74, and then through the flow passage 60, apertures 54, and through bore 46 to the output flow passage 42. As can be seen from the graph of Figure 3, the level of the output flow increases in proportion to increases in the level of the input flow until the input flow reaches a first predetermined level A.

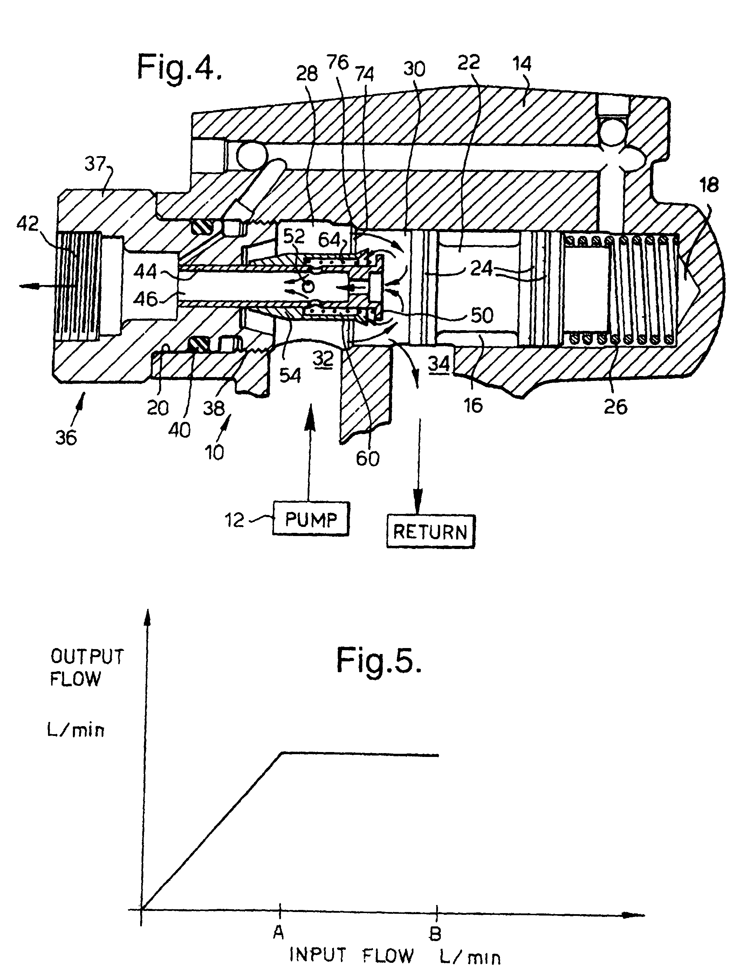

As the level of the input flow increases beyond the first predetermined level A, the increase in fluid pressure in the second pressure chamber 30 acts on the piston valve 22 to move the piston valve against the bias of the spring 26. This causes the piston valve 22 to move away from the valve seat 50 to open the said other end of the through bore 46, and to move to open the return flow passage 34, as shown in Figure 4. Also, as the input flow increases during this (second) stage of operation, the fluid pressure differential between the first pressure chamber 28 and the second pressure chamber 30 (due to the flow restriction 74) increases beyond a point which causes the plunger 54 to slide along the guide tube 44 in an axial direction against the bias of the spring 64. During this second stage of operation, fluid continues to flow from the input flow passage 32 through the first pressure chamber 28 to the second pressure chamber 30 by way of flow restriction 74, and then through the flow passage 60, apertures 54, and through bore 46 to the output flow passage 42. Fluid also flows from the second pressure chamber 30 past the valve seat 50 into the through bore 46 and then to the output flow passage 42, and from the second pressure chamber into the return flow passage 34. The movement of the piston valve 22 relative to the housing 14, and the movement of the plunger 54 relative to the guide tube 44, continue until the level of the input flow reaches a second predetermined level B. During this second stage of operation, as shown in the graph of Figure 5, the level of the output flow from the control device 10 remains substantially constant, and is the difference between the level of input flow and the level of flow through the return flow passage 34.

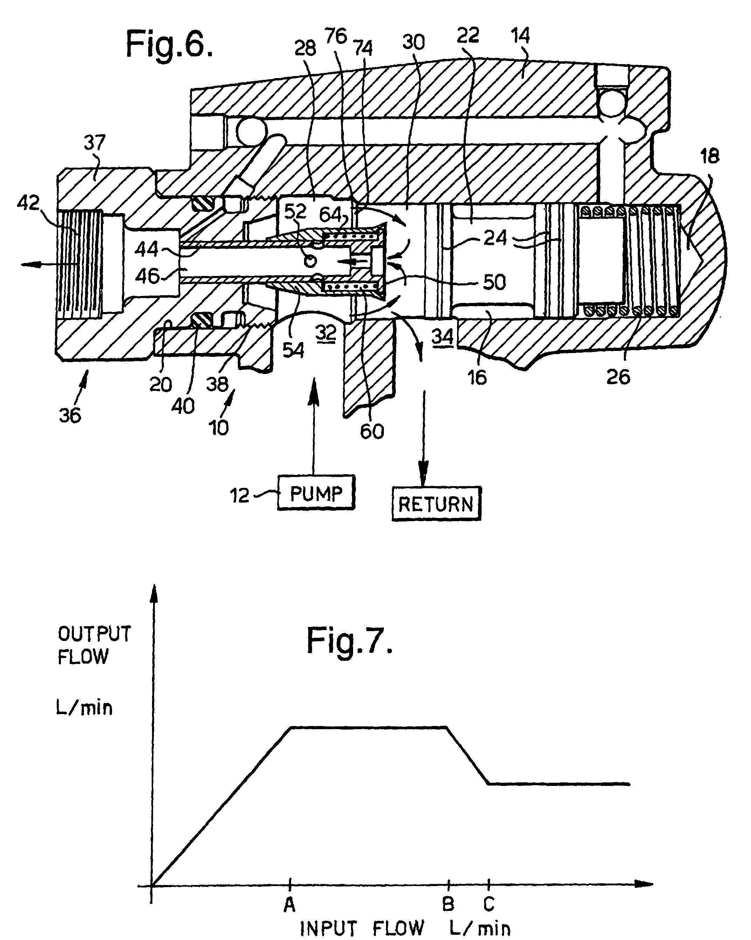

During a third stage of operation, as the level of input flow increases beyond the second predetermined level B, the movement of the plunger 54 relative to the guide tube 44 against the bias of the spring 64 continues such that the plunger begins to close the apertures 52. This action reduces the flow of fluid to the output flow passage 42 and the level of the output flow begins to drop as the level of the input flow continues to increase until the level of the input flow reaches a third predetermined level C, as shown in the graph of Figure 7. At this point, the apertures 52 are substantially closed (although a small amount of fluid flow through the flow passage 60 and apertures 52 may still be possible).

During a fourth stage of operation, as the level of input flow increases beyond the third predetermined level C, the apertures 52 remain closed and fluid flows from the input flow passage 32 through the first pressure chamber 28 to the second pressure chamber 30 by way of flow restriction 74, and then from the second pressure chamber 30 past the valve seat 50 into the through bore 46 and then to the output flow passage 42, and from the second pressure chamber into the return flow passage 34. During this fourth stage of operation, as the level of input flow continues to rise, the valve 22 moves further against the bias of the spring 26 such that the level of the output flow through the output flow passage 42 remains substantially constant, and is the difference between the level of input flow and the level of flow through the return flow passage 34.

The present arrangement is such that, during the various stages of operation of the control device, the level of the output flow is substantially unaffected by any back pressure generated in the output flow passage 42 because the operation of the droop flow device 36 is independent of the operation of the piston valve 22. The level of the output flow in the output flow passage 42, during the second stage of operation, is dependent on the number and diameter of the apertures 52 (that is, the total cross-sectional area of the apertures) and on the minimum cross-sectional area of the through bore 46 (which may be fixed by a portion 80 adjacent the valve seat 50). The level of the output flow in the output flow passage 42, during the fourth stage of operation, is dependent on the minimum cross-sectional area of the through bore 46 (which may be fixed by the portion 80 adjacent the valve seat 50) and on the minimum cross-sectional area of the return flow passage 34. The predetermined input flow levels B and C are determined by the load provided by the springs 26 and 64, and by the position of the apertures 52 in the guide tube 44.

The present invention provides a fluid flow control device with a droop mechanism which is easy to form and assemble, and which uses a minimal number of parts.

## Claims

1. A fluid flow control device (10) for output flow from a fluid pump (12), the fluid flow control device comprising a housing (14) having an axially extending bore (16) therein, the bore being closed at one end (18) of the housing and open at the other end (20) of the housing; a piston valve (22) slidable in the bore and biased away from the closed end; first and second pressure chambers (28,30) in the bore between the piston valve and the open end, the second pressure chamber being adjacent the piston valve; a flow restriction (74) connecting the first and second pressure chambers; an input flow passage (32) opening into the first pressure chamber; a return flow passage (34) connectable with the second pressure chamber and closable by the piston valve; a droop flow device (36) secured in the open end, the droop flow device including an output flow passage (42), a guide tube (44) having an axially extending bore (46) connected to the output flow passage at one end, at least one radially extending aperture (52) in the guide tube, a plunger (54) positioned around the guide tube and slidable thereon to close the or each radially extending aperture, the plunger being biased away from the piston valve to normally open the or each radially extending aperture; **characterised in that** the bore (46) in the guide tube (44) is a through bore; by a valve seat (50) at the other end of the through bore and positioned in the second pressure chamber (30), the piston valve (22) being biased into engagement with the valve seat to normally close the through bore; and **in that** the plunger (54) defines a fluid path (60) between the or each radially extending aperture (52) and the second pressure chamber.

2. A fluid flow control device as claimed in Claim 1, wherein the plunger (54) is biased to normally open the or each radially extending aperture (52) by a spring (64) engaging the plunger and a shoulder (62) on the guide tube (44).

3. A fluid flow control device as claimed in Claim 1, wherein a portion (58) of the plunger (54) is spaced from the guide tube (44) to form a flow passage which defines the fluid path (60), the flow passage opening into the second pressure chamber (30).

4. A fluid flow control device as claimed in Claim 3, wherein the plunger (54) is biased to normally open the or each radially extending aperture (52) by a spring (64) engaging a shoulder (66) in the flow passage (60) and a shoulder (62) on the guide tube (44).

5. A fluid flow control device as claimed in Claim 2 or Claim 4, wherein the spring (64) is a helical coil spring which is positioned around the guide tube (44).

6. A fluid flow control device as claimed in any one of Claims 1 to 5, wherein the flow restriction (74) is defined by a shoulder (76) in the bore (16) between the first and second pressure chambers (28,30) and/or a flared end (78) on the plunger (54) adjacent the opening of the fluid path into the second pressure chamber.

7. A fluid flow control device as claimed in any one of Claims 1 to 6, wherein the plunger (54) has an external diameter which reduces in size in the axial direction away from the second pressure chamber (30).

## Patentansprüche

1. Fluiddurchflusssteuervorrichtung (10) für den Auslassstrom aus einer Fluidpumpe (12), wobei die Fluiddurchflusssteuervorrichtung umfasst: ein Gehäuse (14) mit einer sich darin befindlichen sich axial erstreckenden Bohrung (16), die an einem Ende (18) des Gehäuses geschlossen und am anderen Ende (20) des Gehäuses offen ist; ein Kolbenventil (22), das in der Bohrung verschiebbar ist und vom geschlossenen Ende weg vorgespannt ist; eine erste und zweite Druckkammer (28,30) in der Bohrung zwischen dem Kolbenventil und dem offenen Ende, wobei die zweite Druckkammer neben dem Kolbenventil liegt; eine Durchflussbegrenzung (74), die die erste und zweite Druckkammer verbindet; einen Einlass-Strömungskanal (32), der sich in die erste Druckkammer hinein öffnet; einen Rückfluss-Strömungskanal (34), der mit der zweiten Druckkammer verbunden und durch das Kolbenventil geschlossen werden kann; eine Durchflussminderungsvorrichtung (36), die in dem offenen Ende befestigt ist und die einen Auslass-Strömungskanal (42), ein Führungsrohr (44) mit einer sich axial erstreckenden Bohrung (46), die an einem Ende mit dem Auslass-Strömungskanal verbunden ist, zumindest eine sich radial erstreckende Öffnung (52) in dem Führungsrohr, und einen Kolben (54) umfasst, der um das Führungsrohr und darauf verschiebbar angeordnet ist, um die oder jede sich radial erstreckende Öffnung zu schließen, wobei der Kolben vom Kolbenventil weg vorgespannt ist, um die oder jede sich radial erstreckende Öffnung normalerweise zu öffnen;
**dadurch gekennzeichnet, dass**
die Bohrung (46) in dem Führungsrohr (44) eine Durchgangsbohrung ist; dass sie an dem anderen Ende der Durchgangsbohrung einen in der zweiten Druckkammer (30) angeordneten Ventilsitz (50) aufweist, wobei das Kolbenventil (22) so vorgespannt ist, dass es mit dem Ventilsitz in Eingriff steht, um die Durchgangsbohrung normalerweise zu schließen; und dass der Kolben (54) einen Fluidverlauf (60) zwischen der oder jeder sich radial erstreckenden Öffnung (52) und der zweiten Druckkammer definiert.

2. Fluiddurchflusssteuervorrichtung nach Anspruch 1,
**dadurch gekennzeichnet, dass**
der Kolben (54) durch eine Feder (64), die mit dem Kolben und einer Schulter (62) auf dem Führungsrohr (44) in Eingriff steht, vorgespannt ist, um die oder jede sich radial erstreckende Öffnung (52) normalerweise zu öffnen.

3. Fluiddurchflusssteuervorrichtung nach Anspruch 1,
**dadurch gekennzeichnet, dass**
ein Abschnitt (58) des Kolbens (54) in einem Abstand zum Führungsrohr (44) angeordnet ist, dass ein Strömungskanal ausgebildet wird, der den Fluidverlauf (60) definiert, wobei sich der Strömungskanal in die zweite Druckkammer (30) öffnet.

4. Fluiddurchflusssteuervorrichtung nach Anspruch 3,
**dadurch gekennzeichnet, dass**
der Kolben (54) durch eine Feder (64), die mit einer Schulter (66) in dem Strömungskanal (60) und einer Schulter (62) an dem Führungsrohr (44) in Eingriff steht, vorgespannt ist, um die oder jede sich radial erstreckende Öffnung (52) normalerweise zu öffnen.

5. Fluiddurchflusssteuervorrichtung nach Anspruch 2 oder Anspruch 4,
**dadurch gekennzeichnet, dass**
die Feder (64) eine Schraubendruckfeder ist, die um das Führungsrohr (44) herum angeordnet ist.

6. Fluiddurchflusssteuervorrichtung nach einem der Ansprüche 1 bis 5,
**dadurch gekennzeichnet, dass**
die Durchflussbegrenzung (74) durch eine Schulter (76) in der Bohrung (16) zwischen der ersten und der zweiten Druckkammer (28, 30) und/oder ein aufgeweitetes Ende (78) an dem Kolben (54) neben der Öffnung des Fluidverlaufes in die zweite Druckkammer hinein definiert ist.

7. Fluiddurchflusssteuervorrichtung nach einem der Ansprüche 1 bis 6,
**dadurch gekennzeichnet, dass**
der Kolben (54) einen Außendurchmesser aufweist, dessen Größe in axialer Richtung von der zweiten Druckkammer (30) weg abnimmt.

## Revendications

1. Dispositif de commande de débit de fluide (10) pour le débit de sortie d'une pompe à fluide (12), ce dispositif de commande de débit de fluide comprenant un carter (14) ayant un alésage intérieur (16) s'étendant axialement, l'alésage étant obturé à une extrémité (18) du carter et ouvert à l'autre extrémité (20) du carter ; un piston distributeur (22) pouvant coulisser dans l'alésage et sollicité à l'opposé de l'extrémité obturée ; des première et seconde chambres (28, 30) dans l'alésage entre le piston distributeur et l'extrémité ouverte, la seconde chambre de pression étant adjacente au piston distributeur; un étranglement d'écoulement (74) reliant les première et seconde chambres de pression ; un passage de débit d'entrée (32) débouchant dans la première chambre de pression ; un passage de débit de retour (34) pouvant être relié à la seconde chambre de pression et pouvant être obturé par le piston distributeur ; un dispositif de réduction de débit (36) fixé dans l'extrémité ouverte, le dispositif de réduction de débit incluant un passage de débit de sortie (42), un tube de guidage (44) ayant un alésage (46) s'étendant axialement relié au passage de débit de sortie à une extrémité, au moins une ouverture (52) s'étendant axialement dans le tube de guidage, un plongeur (54) positionné autour du tube de guidage et pouvant coulisser sur celui-ci pour obturer la ou chaque ouverture s'étendant radialement , le plongeur étant sollicité vers l'opposé du piston distributeur pour normalement ouvrir la ou chaque ouverture s'étendant radialement ; **caractérisé en ce que** l'alésage (46) dans le tube de guidage (44) est un alésage traversant ; par un siège de soupape (50) à l'autre extrémité de l'alésage traversant et positionné dans la seconde chambre de pression (30), le piston distributeur (22) étant sollicité en engagement avec le siège de soupape pour normalement obturer l'alésage traversant ; et **en ce que** le plongeur (54) définit un trajet de fluide (60) entre la ou chaque ouverture (52) s'étendant radialement et la seconde chambre de pression.

2. Dispositif de commande de débit de fluide selon la revendication 1 dans lequel le plongeur (54) est sollicité pour normalement ouvrir la ou chaque ouverture (52) s'étendant radialement par un ressort (64) engageant le plongeur et un épaulement (62) sur le tube de guidage (44).

3. Dispositif de commande de débit de fluide selon la revendication 1 dans lequel une partie (58) du plongeur (54) est espacée du tube de guidage (44) pour former un passage de débit qui définit le trajet de fluide (60), le passage de fluide débouchant dans la seconde chambre de pression (30).

4. Dispositif de commande de débit de fluide selon la revendication 3 dans lequel le plongeur (54) est sollicité pour normalement ouvrir la ou chaque ouverture (52) s'étendant radialement par un ressort (64) engageant un épaulement (66) dans le passage de débit (60) et un épaulement (62) sur le tube de guidage (44).

5. Dispositif de commande de débit de fluide selon la revendication 2 ou 4 dans lequel le ressort (64) est un ressort hélicoïdal qui est positionné autour du tube de guidage (44).

6. Dispositif de commande de débit de fluide selon l'une quelconque des revendications 1 à 5 dans lequel l'étranglement d'écoulement (74) est défini par un épaulement (76) dans l'alésage (16) entre la première et la seconde chambres de pression (28, 30) et/ou par une extrémité évasée (78) sur le plongeur (54) adjacente à l'orifice du trajet de fluide dans la seconde chambre de pression.

7. Dispositif de commande de débit de fluide selon l'une quelconque des revendications 1 à 6 dans lequel le plongeur (54) a un diamètre externe qui se réduit en dimension dans la direction axiale à l'opposé de la seconde chambre de pression (30).
